(19) Europäisches Patentamt
European Patent Office
Office européen des brevets

(11) Veröffentlichungsnummer : **0 183 025**
**B1**

(12) # EUROPÄISCHE PATENTSCHRIFT

(45) Veröffentlichungstag der Patentschrift : **23.11.89**

(21) Anmeldenummer : **85112892.6**

(22) Anmeldetag : **11.10.85**

(51) Int. Cl.$^4$ : **C 09 D 17/00**, C 08 G 59/14, C 08 G 59/16, C 08 G 59/56, C 08 G 18/80, C 09 D 5/44, C 09 D 3/58

(54) **Verfahren zur Herstellung von Bindemitteln für Pigmentpasten für wasserverdünnbare Lacke.**

(30) Priorität : **22.10.84 AT 3358/84**

(43) Veröffentlichungstag der Anmeldung : **04.06.86 Patentblatt 86/23**

(45) Bekanntmachung des Hinweises auf die Patenterteilung : **23.11.89 Patentblatt 89/47**

(84) Benannte Vertragsstaaten : **BE CH DE FR GB IT LI NL SE**

(56) Entgegenhaltungen :
**EP-A- 0 017 248**
**EP-A- 0 028 402**
**EP-A- 0 076 955**
**Die Akte enthält technische Angaben, die nach dem Eingang der Anmeldung eingereicht wurden und die nicht in dieser Patentschrift enthalten sind.**

(73) Patentinhaber : **Vianova Kunstharz Aktiengesellschaft**
**A-8402 Werndorf (AT)**

(72) Erfinder : **Paar, Willibald, Dr.**
**Haberlandtweg 23**
**A-8045 Graz (AT)**
Erfinder : **Hönig, Helmut, Dr.**
**Seebachergasse 10**
**A-8010 Graz (AT)**

**EP 0 183 025 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von kationischen Bindemitteln für Pigmentpasten für wasserverdünnbare Lacke, insbesonders für die Anwendung in der kathodischen Elektrotauchlackierung (K-ETL) auf der Basis von niedermolekularen, Oxazolidingruppen tragenden modifizierten Epoxidverbindungen.

In der Lackindustrie ist es allgemein üblich, bei der Herstellung von pigmentierten Lacken die Pigmente in einem Teil des zur Verwendung gelangenden Bindemittels oder in speziellen Bindemitteln (Pastenharzen), zu vermahlen. Diese sogenannten Mahlpasten werden anschließend mit dem restlichen Bindemittel « aufgelackt ».

Es ist offensichtlich, daß als spezielle Pastenharze Bindemittel gefordert werden, welche ein besonderes Benetzungsvermögen für die Pigmente aufweisen. Überdies müssen sie mit dem Hauptbindemittel gut verträglich sein und dürfen in der notwendigen Menge die Eigenschaften des Hauptbindemittels nicht wesentlich verändern. Überdies sollen Pastenharze eine relativ niedrige Viskosität aufweisen.

Bei der Führung von K-ETL-Becken hat es sich als vorteilhaft erwiesen, die Zugabe des Nachsetzmaterials mit zwei getrennten Komponenten, nämlich einer höherpigmentierten Farbkomponente und einer Klarlackkomponente durchzuführen. Eine, gegebenenfalls automatische Steuerung der Badführung wird dadurch wesentlich erleichtert.

Aus der Literatur sind für diese Arbeitsweise z. B. aus den Europäischen Patentanmeldungen 0 107 088, 0 107 089 und 0 107 098 Kunstharze bekannt, welche als Pigmentpasten-Bindemittel verwendet werden können. Diese bekannten Produkte auf Basis von quaternisierten Monoepoxiden haben jedoch den Nachteil die Spannungsfestigkeit (auch als Durchschlagsfestigkeit bezeichnet) des Lacksystems, also der verdünnten Mischung aus Farbkomponente und Klarlackkomponente, herabzusetzen, was im weiteren zu einer Verschlechterung des Umgriffs, d. h. der Beschichtung elektrisch abgeschirmter Teile des Werkstückes, führt.

Oxazolidingruppen tragende Bindemittel sind z. B. aus der EP-B1 00 28 402, der EP-A2 00 76 955 oder der AT-PS 372 689 bekannt. Diese Bindemittel werden in vielen Fällen auch für die Herstellung von Pigmentpasten empfohlen, doch können diese Produkte aufgrund ihres Aufbaus mit den für die K-ET-Lackierung üblichen Pigmentmischungen nicht höher als im Verhältnis von 1 Gew.-Teil Bindemittel : 3 Gew.-Teilen Pigment verarbeitet werden, ohne daß es bei den für Elektrotauchmaterialien üblichen niedrigen Badfestkörperanteilen zu Sedimentationen und Pigmentagglomerationen kommt. In der Praxis zeigt sich dieser Effekt dann an der gestörten Lackierung insbesonders an den horizontalen Flächen des Werkstücks.

Dasselbe gilt auch für Produkte, wie sie in der EP-B1-00 17 248 beschrieben sind. Auch in diesem Fall ist die Herstellung hochpigmentierter Pigmentpasten, welche störungsfreie Lackfilme ergeben, nicht möglich.

Für die Verwendung dieser Produkte als Pigmentpastenharze ist überdies eine niedrigere Viskosität und eine bessere Löslichkeit der neutralisierten Farbpaste im Badmaterial wünschenswert, damit eine möglichst rasche Homogenisierung des Lackbades erreicht wird.

Es wurde nun gefunden, daß man Pigmentpasten-Bindemittel, welche insbesonders für das 2-Komponenten-Nachsetzverfahren beim Betrieb von K-ETL-Anlagen geeignet sind, durch gezielte Modifizierung von niedermolekularen Di- oder Polyepoxidverbindungen unter Einbau von Oxazolidingruppierungen erhält.

Die Erfindung betrifft demgemäß ein Verfahren zur Herstellung von kationischen, nach mindestens partieller Neutralisation der basischen Gruppen wasserverdünnbaren Bindemitteln auf der Basis von Oxazolidingruppen tragenden, modifizierten Epoxidverbindungen, welches dadurch gekennzeichnet ist, daß man eine Di- oder Polyepoxidverbindung mit einem Molekulargewicht von maximal 2000, vorzugsweise auf Basis von Diolen oder von Polyalkylenglykolen oder von Dienpolymeren oder von Bisphenol A oder von Phenolnovolaken oder ein Gemisch dieser Verbindungen mit, bezogen auf 1 Epoxidval dieser Verbindung, 0,4 bis 1,0 Mol primären Aminogruppen von aliphatischen primären Mono- und/oder prim.-tertiären Diaminen und 0 bis 0,6 Mol einer Monocarboxylverbindung, wobei die Summe der primären Aminogruppen und der gegebenenfalls eingesetzten Carboxylgruppen mindestens 80 % der Anzahl der Epoxidgruppen in der Epoxidverbindung entspricht, bis zur vollständigen Umsetzung aller Epoxidgruppen reagiert, das Reaktionsprodukt mit einer, bezogen auf die vorhandenen NH-Gruppen, vorzugsweise äquimolaren Menge einer Carbonylverbindung, vorzugsweise Formaldehyd, unter Wasserabspaltung und Ausbildung einer Oxazolidingruppierung umsetzt und gegebenenfalls die vorhandenen isocyanatreaktiven H-Atome zur Gänze oder teilweise mit einer, gegebenenfalls Oxazolidingruppen tragenden Monoisocyanatverbindung oder gegebenenfalls mit einer Monoepoxidverbindung reagiert, wobei die Mengen der Ausgangsmaterialien so gewählt werden, daß die Endprodukte, ein Molekulargewicht von 500 bis 4000, vorzugsweise von 600 bis 2000, ein Oxazolidinäquivalent von 250 bis 1200, eine Aminzahl von mindestens 80, vorzugsweise von 100 bis 200 mg KOH/g und einen Anteil an aliphatischen Molekülteilen von mindestens 30, vorzugsweise 50 bis 90 % aufweisen.

Unter dem Begriff « aliphatischer Molekülanteil » werden Kohlenstoffketten mit 4 und mehr Kohlenstoffatomen sowie die entsprechenden Oxyalkylenketten verstanden.

In einer bevorzugten Ausführungsform werden pro Epoxidval der eingesetzten Epoxidverbindung
0,3 -0,7 Mol eines prim. tert. Diamins und
0 -0,7 Mol Fettsäuren mit mehr als 8, vorzugsweise mehr als 12 Kohlenstoffatomen und/oder
0 -0,7 Mol primäre Monoamine mit mehr als 3, vorzugsweise mehr als 8 Kohlenstoffatomen
zur Umsetzung gebracht und nach Bildung der Oxazolidinverbindung mindestens 50 % der freien Hydroxylgruppen mit einem Oxazolidingruppen tragenden Monoisocyanat umgesetzt.

Nach diesem Aufbauprinzip, welches in dem beigefügten Formelbild für eine der bevorzugten Ausführungsformen schematisch dargestellt ist, kann eine große Anzahl verschiedener Harzkörper hergestellt werden, welche durch entsprechende Auswahl der Substituenten den jeweiligen Erfordernissen bzw. dem der Klarlackkomponente zugrundeliegenden Bindemittel, insbesonders bezüglich der erforderlichen Verträglichkeitseigenschaften, angepaßt werden können.

Die erfindungsgemäß hergestellten Produkte zeigen, insbesonders wenn ihre Struktur ausgewogenen hydrophilhydrophoben Aufbau zeigt, eine extreme Pigmentierbarkeit. So können mit Produkten, welche als modifizierende Komponente langkettige Monocarbonsäuren oder Fettamine enthalten, Pigmentpasten in einem Verhältnis von 1 Gewichtsteil Bindemittel : bis zu 15 Gewichtsteilen Pigment hergestellt werden. Der Anteil an dem Pastenharz kann dadurch auf Anteile von unter 5 %, bezogen auf das Gesamtbindemittel im Lack, gedrückt werden.

Da die Produkte auch für sich eine ausgezeichnete Spannungsfestigkeit bei der elektrischen Abscheidung, auch bei der Ausbildung höherer Filmschichtstärken, zeigen, sind für das gesamte Bindemittelsystem, auch bei höheren Anteilen, keine Einbußen bei den Eigenschaften, z. B. des Umgriffs oder der Korrosionsfestigkeit, zu befürchten. Da die Produkte im allgemeinen sehr niedrige Viskositäten aufweisen, wirken sie in der Klarlackkomponente im Sinne eines Hilfslösungsmittels, wodurch die Herstellung lösungsmittelarmer Lackmaterialien wesentlich vereinfacht bzw. in vielen Fällen überhaupt erst in einwandfreier Weise möglich wird.

Ein weiterer Vorteil der erfindungsgemäß hergestellten Produkte beteht in der besseren Maschinenausnützung bei der Herstellung der Pigmentpasten.

Als Di- oder Polyepoxidverbindungen mit einem Molekulargewicht von maximal 2000 kommen die Diglycidylether von Diolen, insbesonders von (Poly)-Oxyalkylendiolen mit Epoxidäquivalentgewichten zwischen 150 und 350, vorzugsweise Diglycidylether des Polypropylenglykols, zur Verwendung. Ebenso können auch epoxidierte Polydiene, wie die handelsüblichen epoxidierten Polybutadienöle, mit Epoxidäquivalentgewichten von 100 bis 600, vorzugsweise von 200 bis 500, oder die niedrigmolekularen Diglycidylether des Bisphenol A mit Epoxidäquivalenten von ca. 200 oder entsprechende Polyglycidylether von Phenolnovolaken oder Mischungen der genannten Produkte eingesetzt werden.

Als aliphatische primäre Amine kommen, primäre Alkylamine mit 4 und mehr Kohlenstoffatomen, insbesondere die sogenannten Fettamine, oder primäre Alkylaminogruppen tragende Verbindungen vom Typ des N-Aminoethylpiperazins in Frage.

Als prim. tertiäre Diamine werden bevorzugt N,N-Dialkylaminoalkylamine, wie Dimethylaminoethylamin, Diethylaminopropylamin oder Dimethylaminoneopentanamin (N,N,2,2-Tetramethylpropan-1,3-diamin) eingesetzt.

Als Monocarboxylverbindungen können je nach dem gewünschten Hydrophobierungsgrad Monocarbonsäuren mit mehr als 8 C-Atomen, insbesonders Fettsäuren mit mehr als 12 C-Atomen verwendet werden. Zu diesen zählen die in den natürlichen Ölen vorkommenden Fettsäuren und deren Umwandlungsprodukte sowie Tallölfettsäuren oder synthetische Fettsäuren.

Weiters können als Monocarboxylverbindungen vorteilhaft Halbester von Dicarbonsäureanhydriden mit Monoalkoholen oder N-Hydroxyalkyloxazolidinen, wie sie beispielsweise in der EP-B1 00 28 402 beschrieben sind, verwendet werden.

Im Falle des Einsatzes von Monocarboxylverbindungen werden diese in einer ersten Reaktionsstufe bei 70 bis 120 °C bis zu einer Säurezahl von weniger als 3 mg KOH/g mit der Epoxidverbindung umgesetzt.

Die Umsetzung der Epoxidverbindung mit den Aminen erfolgt bei 70 bis 80 °C bis alle vorhandenen Epoxidgruppen reagiert haben (Formel (I) des Formelschemas).

Die Ausbildung der Oxazolidingruppierung erfolgt durch Ringschluß über die entstandene sekundäre Aminogruppe und der benachbarten sekundären Hydroxylgruppe durch Reaktion mit einer Carbonylverbindung. Als solche wird vorzugsweise Formaldehyd verwendet, doch sind auch andere aliphatische oder aromatische Aldehyde, wie Butanal oder Benzaldehyd oder Ketone wie Methylisobutylketon geeignet (siehe Formel (II) des Formelschemas). Die Reaktion erfolgt bei 80 bis 120 °C, wobei das entstehende Reaktionswasser durch azeotrope Destillation mit Hilfe eines Schleppmittels (z. B. einen Benzinkohlenwasserstoff oder Toluol), aus der Reaktionsmasse entfernt wird. Die Reaktion ist beendet, wenn die berechnete Wassermenge abgeschieden wurde.

Zur Erzielung besonders günstiger Eigenschaften können die noch verbliebenen sekundären Hydroxyl- bzw. Aminogruppen ganz oder teilweise mit weiteren modifizierenden Komponenten umgesetzt werden.

Eine solche Modifizierung kann beispielsweise durch vollständige oder teilweise Umsetzung der freien sekundären Hydroxylgruppen mit Monoisocyanatverbindungen erfolgen. Als Monoisocyanatverbindungen können die handelsüblichen Produkte dieser Stoffklasse eingesetzt werden. Für den spezifischen

Anwendungszweck der erfindungsgemäß hergestellten Produkte als Pigmentpastenharze werden vorzugsweise Monoisocyanate eingesetzt, welche durch Umsetzung von äquimolaren Mengen von Diisocyanaten und N-Hydroxyalkyloxazolidinen erhalten werden, wie dies in der AT-PS 366 401 oder der AT-PS 374 816 beschrieben ist. Die Umsetzung des Monoisocyanats erfolgt bei 50 bis 80 °C bis zu einem Isocyanatwert von praktisch Null.

In einer alternativen Ausführungsform kann diese weitere Modifikation auch durch gemeinsame Umsetzung der modifizierten Epoxidverbindung und eines N-Hydroxyalkyloxazolidins mit einem Diisocyanat bei 30 bis 50 °C erfolgen.

Gegebenenfalls vorhandene sekundäre Aminogruppen (z. B. aus dem N-Aminoethylpiperazin) können als Reaktionspartner für eine Modifizierung durch die obengenannten Monoisocyanate oder durch Monoepoxidverbindungen dienen.

Die angeführten Komponenten werden in Mengenverhältnissen eingesetzt, welche für die erfindungsgemäß hergestellten Bindemittel folgende Kennzahlenbereiche ergeben :

Molekulargewicht : 500-4000, vorzugsweise 600-2000
Oxazolidinäquivalent (= Molekulargewicht pro Oxazolidingruppe) : 250-1200
Aminzahl : mind. 80, vorzugsweise 100 bis 200 mg KOH/g
Anteil an aliphatischen Molekülteilen : mind. 30, vorzugsweise 50 bis 90 % des gesamten Moleküls

Anspruchsgemäß werden dafür pro Epoxidval der Epoxidverbindung 0,4 bis 1,0 Mol primäre Aminogruppen und 0 bis 0,6 Mol Carboxylgruppen eingesetzt, wobei die Summe der primären Aminogruppen und der gegebenenfalls eingesetzten Carboxylgruppen mindestens 80 % der Anzahl der Epoxidgruppen beträgt.

Die erfindungsgemäß hergestellten Produkte werden in bekannter Weise mit Pigmenten, Füllstoffen, Farbstoffen und gegebenenfalls anderen Lackadditiven zu Pigmentpasten verarbeitet. Für die Herstellung dieser Pigmentpasten werden die üblichen Misch- und Reibaggregate, wie Dissolver, Sand-, Perl- oder Kugelmühlen oder Walzenreibgeräte verwendet.

Die Pigmentpasten werden dann mit der Klarlackkomponente aufgelackt, sodaß ein Lack mit dem gewünschten Pigment-Bindemittelverhältnis resultiert. Die aus den erfindungsgemäß hergestellten Pastenharzen gefertigten Pigmentpasten eignen sich aufgrund ihres hohen Pigmentanteiles insbesonders für das 2-Komponenten-Nachsetz-Verfahren beim Betrieb von K-ETL-Becken, sowie zur Herstellung von Lackformulierungen mit niedrigen Anteilen an organischen Hilfslösungsmitteln.

Die Beurteilung solcher Pastenharz-Bindemittel bzw. der daraus hergestellten Pigmentpasten erfolgt üblicherweise durch Feststellung eines eventuellen Siebrückstandes pro Volumseinheit bei einer Siebmaschenweite von 20 bis 30 µm bei verschiedenem Alter des verdünnten Lackes. Bei Elektrotauchlacken stellt zusätzlich der sogenannte « L-Blech-Test », d. h. die Beschichtung eines L-förmig gebogenen Stahlblechs und die Beurteilung der horizontalen Flächen ein Kriterium für das Absetzverhalten des Lackes bzw. die Pigmentbenetzung dar.

Die folgenden Beispiele sollen die Erfindung näher erklären, ohne daß dadurch ihr Umfang beschränkt wird. Alle Mengen- und Prozentangaben beziehen sich, soweit nicht anders angegeben, auf Gewichtseinheiten.

Folgende Abkürzungen werden in den Beispielen verwendet :

| | |
|---|---|
| DMAPA | N,N-Dimethylaminopropylamin |
| DEAPA | N,N-Diethylaminopropylamin |
| PF 91 | Paraformaldehyd, 91 % |
| CE | technisches Gemisch aus Glycidylestern von 1,1-Dimethyl-($C_7$-$C_9$) carbonsäuren |
| TDI | Toluylendiisocyanat (handelsübliches Isomerengemisch) |
| THMDI | Trimethylhexamethylendiisocyanat |
| PSA | Phthalsäureanhydrid |
| EGL | Ethylenglykolmonoethylether |
| BUGL | Ethylenglykolmonobuthylether |
| PME | Propylenglykolmonomethylether |
| DMDE | Diethylenglykoldimethylether |

### Beispiel 1

In einem mit Rührer, Thermometer, Zugabe trichter, Wasserabscheider und Rückflußkühler ausgestatteten Reaktionsgefäß werden 440 Tle eines epoxidierten Polybutadienöles (Molekulargewicht ca. 1400, Epoxidäquivalent ca. 440) mit 92 Tlen DMAPA (0,9 Mol) in Anwesenheit von 0,5 Tlen 2,6-Di-tert.-butyl-4-methylphenol (Inhibitor) bei 160 bis 200 °C umgesetzt, bis alle Epoxidgruppen verbraucht sind. Nach Kühlen auf 80 °C werden 30 Tle PF 91 (0,9 Mol) zugegeben und mit Spezialbenzin (Siedebereich 80-120 °C) bei dieser Temperatur 18 Tle Reaktionswasser azeotrop entfernt. Nach Abziehen des Schleppmittels unter Vakuum wird der Ansatz in 59 Tlen BUGL gelöst. Das Harz weist folgende Kennzahlen auf :

| | |
|---|---|
| Viskosität : | 2600 mPa.s/25 °C |
| Oxazolidinäquivalent (ber.) : | 604 |
| Aminzahl : | 185 mg KOH/g |
| Aliphatischer Anteil : | 80 % |
| Molekulargewicht (ber.) : | 1632 |
| Löslichkeit (1) : | 25 mMol Ameisensäure pro 100 g Festharz |

(1) Zur Herstellung einer stabilen wäßrigen Dispersion notwendige Säuremenge.

## Beispiel 2

In der im Beispiel 1 beschriebenen Apparatur werden 320 Tle eines Epoxidharzes auf Basis von Polypropylenglykol (Äquivalentgewicht ca. 320) bei 75 bis 80 °C mit 134 Tlen Talgfettamin und 52 Tlen DEAPA bis zu einem Epoxidwert von 0 umgesetzt. Nach Zugabe von 30 Tlen PF 91 werden mit Spezialbenzin (Siedebereich 80-120 °C) 19 Tle Reaktionswasser azeotrop entfernt. Das Schleppmittel wird anschließend im Vakuum abdestilliert. Das Harz weist folgende Kennzahlen auf :

| | |
|---|---|
| Viskosität : | 1500 mPa.s/25 °C |
| Oxazolidinäquivalent (ber.) : | 574 |
| Aminzahl : | 141 mg KOH/g |
| Aliphatischer Anteil : | 86 % |
| Molekulargewicht : | 1034 |
| Löslichkeit : | ohne Säurezusatz löslich |

## Beispiel 3

Analog Beispiel 2 werden 380 Tle eines Epoxidharzes auf Basis von Bisphenol A (Epoxidäquivalent ca. 190) mit 268 Tlen Talgfettamin und 104 Tlen DEAPA bei 75 bis 80 °C bis zu einem Epoxidwert von 0 umgesetzt. Nach Zugabe von 60 Tlen PF 91 werden mit Toluol als Schleppmittel 38 Tle Reaktionswasser aus dem Ansatz entfernt. Nach Abziehens des Schleppmittels im Vakuum wird der Ansatz mit 90 Tlen PME gelöst. Das Harz weist folgende Kennzahlen auf :

| | |
|---|---|
| Viskosität : | 7000 mPa.s/25 °C |
| Oxazolidinäquivalent (ber.) : | 430 |
| Aminzahl : | 188 mg KOH/g |
| Aliphatischer Anteil : | 33 % |
| Molekulargewicht (ber.) : | 774 |
| Löslichkeit : | 30 mMol Ameisensäure pro 100 g Festharz |

## Beispiel 4

In der im Beispiel 1 beschriebenen Apparatur werden 320 Tle eines Epoxidharzes auf Basis Polypropylengklykol (Epoxidäquivalent 320) mit 140 Tlen Leinölfettsäure in Gegenwart von 0,5 Tlen Triethylamin als Katalysator bei 120 °C bis zu einer Säurezahl von weniger als 3 mg KOH/g verestert. Nach Kühlen auf 80 °C werden 52 Tle N-Aminoethylpiperazin zugegeben und bei 80 °C bis zu einem Epoxidwert von 0 umgesetzt. Dann werden 14 Tle PF 91 zugegeben und mit Hilfe von Spezialbenzin (Siedebereich 80-120 °C) 9 Tle Wasser azeotrop entfernt.

Anschließend wird das Schleppmittel entfernt und der Ansatz mit 100 Tlen CE bei 120 °C bis zu einem Epoxidwert von 0 reagiert.

In einem getrennten Reaktionsgefäß wird ein Oxazolidingruppen tragendes Monoisocyanat in folgender Weise hergestellt :

70 Tle TDI werden in 85 Tlen DMDE gelöst und bei 25 bis 30 °C 129 Tle eines Oxazolidins (hergestellt aus 24 Tlen Monoethanolamin, 100 Tlen CE und 13 Tlen PF 91) portionsweise zugegeben und bis zu einem Isocyanatwert, welcher einer Isocyanatgruppe entspricht, reagiert.

Das so hergestellte Monoisocyanat wird bei 50 bis 60 °C dem oben hergestellten Harz zugesetzt und der Ansatz bis zu einem Isocyanatwert von 0 reagiert. Der Ansatz wird in 95 Tlen DMDE gelöst und weist folgende Kennzahlen auf :

| | |
|---|---|
| Viskosität : | 16.000 mPa.s/25 °C |
| Oxazolidinäquivalent (ber.) : | 1019 |
| Aminzahl : | 110 mg KOH/g |
| Aliphatischer Anteil : | 57 % |
| Molekulargewicht (ber.) : | 1632 |
| Löslichkeit : | 10 mMol Ameisensäure pro 100 g Festharz |

Beispiel 5

In einem geeigneten Reaktionsgefäß werden 74 Tle PSA mit 162 Tlen des im Beispiel 5 eingesetzten Oxazolidins (aus Monoethanolamin, CE und PF 91) bei 75 bis 80 °C bis zu einer Säurezahl von 120 mg KOH/g umgesetzt.

Dem Ansatz werden 320 Tle eines Epoxidharzes auf Basis Polypropylenglykol (Epoxidäquivalent ca. 320) zugegeben und die Mischung bei 120 °C bis zu einer Säurezahl von weniger als 3 mg KOH/g verestert. Nach Kühlen auf 70 °C werden 52 Tle DEAPA zugesetzt und die Temperatur bis zu einem Epoxidwert von 0 gehalten. Nach Zugabe von 13 Tlen PF 91 werden mit Hilfe von Spezialbenzin (Siedebereich 80 bis 120 °C) als Schleppmittel 8 Tle Reaktionswasser azeotrop entfernt. Anschließend wird der Ansatz mit 125 Tlen des Oxazolidins aus Monoäthanolamin, CE und PF 91, wie es auch im Beispiel 5 eingesetzt wurde, gemischt und auf 30 bis 35 °C gekühlt. Dann werden 84 Tle THMDI portionsweise zugesetzt und solange bei 50 °C reagiert, bis alle Isocyanatgruppen verbraucht sind. Nach Entfernen des Schleppmittels wird der Ansatz in 200 Tlen BUGL gelöst. Folgende Kennzahlen wurden ermittelt:

| | |
|---|---|
| Viskosität: | 21.000 mPa.s/25 °C |
| Oxazolidinäquivalent (ber.): | 624 |
| Aminzahl: | 116 mg KOH/g |
| Aliphatischer Anteil: | 59 % |
| Molekulargewicht: | 1650 |
| Löslichkeit: | 15 mMol Ameisensäuren pro 100 g Festharz |

Prüfung der erfindungsgemäß hergestellten Bindemittel als Pigmentpastenharze

Aus den Bindemitteln entsprechend den Beispielen 1 bis 5 wurden gemäß der nachstehenden Formulierung Pigmentpasten gemäß üblichen Standardprüfrezepturen hergestellt, wobei die Farbpasten Bindemittel/Pigment-Verhältnisse von 1 : 6, 1 : 12 und 1 : 15 aufweisen.

Von den Farbpasten wurde zwei Stunden nach der Fertigung die Viskosität (gemessen als Auslaufzeit nach DIN 23 211/23 °C) bestimmt.

Die Farbpasten wurden dann den verdünnten Klarlacken (11 % wäßrige Lösungen) verschiedener K-ETL-Bindemitteltypen unter Rühren zugesetzt und nach 2 Stunden, 14 Tagen und 4 Wochen (Rühren bei Raumtemperatur) der Siebrückstand bestimmt und eine « L-Blech-Beschichtung » durchgeführt. Als K-ETL-Bindemittel wurden praxisgerechte Materialien auf verschiedener Basis eingesetzt. Zum Vergleich wurden Pigmentpastenharze herangezogen, wie sie zum Zeitpunkt der Anmeldung in der Praxis eingesetzt werden.

(a) Formulierung und Herstellung der Pigmentpasten

Aus 100 Tlen Festharz, 5 Tlen eines Netzmittels auf Basis eines Acetylenalkohols (berechnet als Festsubstanz, eingesetzt als 25 %ige Lösung in EGL), 24 Tle Milchsäure (5 N) wird unter Verwendung von deionisiertem Wasser eine 15 %ige Lösung hergestellt, welche in einer Laborperlmühle mit den Pigmentzusammensetzungen entsprechend der folgenden Tabelle (1) vermahlen wird.

Für die Vergleichsversuche wurden Pigmentpastenharze herangezogen, welche in ihrem Aufbau in der EP-B1-00 28 402 (Vergleichsbindemittel X) und der EP-A2-00 76 955 (Vergleichsbindemittel Y) beschrieben sind.

Zur Herstellung der Elektrotauchlacke wurden die Pigmentpasten unter Rühren wäßrigen Klarlacken mit einem Festkörpergehalt von 11 % zugesetzt, wobei die Mengenverhältnisse so gewählt wurden, daß das gewünschte Bindemittel-Pigment-Verhältnis resultierte. Als Klarlack-Bindemittel wurden

(a) eine durch thermische Polymerisation härtende Type, entsprechend US-PS 41 74 332 (Harz L)
(b) eine durch Umesterung härtende Type entsprechende EP 00 12 463 (Harz M) und
(c) eine durch Umurethanisierung härtende Type entsprechend DE-PS 22 52 536 (Harz N)

eingesetzt. Die Lacke wurden zur Prüfung mit deionisiertem Wasser auf einen Festkörpergehalt von 16 % verdünnt.

(Siehe Tabelle 1 Seite 7 f.)

Tabelle 1

Pigmentzusammensetzungen in den Pigmentpasten A-F

| PASTE | PIGMENTZUSAMMENSETZUNG Farbruß | Al-Silikat-pigment | Titan-dioxid | bas.Pb-silikat | B/P-Verhältnis i.d.Paste |
|---|---|---|---|---|---|
| A | 54 | 456 | — | 90 | 1 : 6 |
| B | 24 | -- | 1104 | 72 | 1 : 12 |
| C | 30 | -- | 1380 | 90 | 1 : 15 |
| D | 9 | 76 | — | 15 | 1 : 1 |
| E | 18 | 152 | -- | 30 | 1 : 2 |
| F | 6 | -- | 278 | 18 | 1 : 3 |

Durchführung der Prüfungen :

Siebrückstand : 1 Liter der verdünnten Lacklösung wird durch ein gewogenes Perlonsieb (Maschenweite 28 µm) gegossen. Das Sieb wird mit deionisiertem Wasser nachgespült und nach Trocknung (1 Stunde/110 °C) gewogen. Das Ergebnis wird in mg Rückstand angegeben.

« L-Blech-Beschichtung » : Ein zinkphosphatiertes Stahlblech (ca. 10 × 20 cm) wird in der Mitte rechtwinkelig gebogen. Das Blech wird im Beschichtungsbad so eingehängt, das der waagrechte Schenkel des L etwa 15 cm unter der Oberfläche des Lackbades ist. Die Beschichtung erfolgt bei abgestellter Rührung und mit einer Beschichtungsdauer von 4 Minuten. Nach Ende der Beschichtung verbleibt das Blech noch 2 Minuten im Bad. Anschließend wird das Blech aus dem Bad genommen, nach weiteren 2 Minuten mit Wasser gespült und eingebrannt. Das Blech wird visuell hinsichtlich Verlauf, Glanz und Sedimentationserscheinungen beurteilt.

Die Zusammensetzungen der Prüflacke und die resultierenden Ergebnisse sind in der Tabelle 2 zusammengefaßt.

Die Abkürzungen in der Tabelle 2 haben folgende Bedeutung :
i.O. Beschichtung in Ordnung, keine Sedimentationserscheinungen
LM leichte Mattierung
M Film matt, noch keine Verlaufstörungen
S deutliche Sedimentationserscheinungen
n.i.O. Film unbrauchbar
XX nicht mehr bestimmbar
NM nicht meßbar
B/P Verh. Bindemittel/Pigmentverhältnis

(Siehe Tabelle 2 Seite 8 f.)

Tabelle 2

Prüfung der Pastenharze gemäß Beispiel 1-5 bzw. Vergleichsbeispiele

| ET-LACK - KOMBINATION | | | | | | | PRÜFRESULTATE | | | | | |
|---|---|---|---|---|---|---|---|---|---|---|---|---|
| | | PIGMENTPASTE | | | | | SIEBRÜCKSTAND | | | "L - BLECH" | | |
| Prüfkombination | Klarlackbindemittel | Pastenharz | Pigmentzusammensetzung | Viskosität der Paste, sec. | B/P - Verh. Paste | B/P - Verh. ET - Lack | nach 24 Stunden | nach 14 Tagen | nach 4 Wochen | nach 24 Stunden | nach 14 Tagen | nach 4 Wochen |
| 1 | L | 1 | A | 50 | 1 : 6 | 1:0,2 | 5 | 7 | 7 | i.O. | i.O. | i.O. |
| 2 | L | 1 | B | 43 | 1 :12 | 1:0,5 | 2 | > 2 | > 2 | i.O. | i.O. | i.O. |
| 3 | L | 1 | C | 55 | 1 :15 | 1:0,5 | 12 | 15 | 15 | LM | M | M |
| 4 | M | 1 | B | 43 | 1 :12 | 1:0,5 | 3 | 2 | 3 | i.O. | i.O. | i.O. |
| 5 | M | 1 | C | 55 | 1 :15 | 1:0,5 | 5 | 8 | 8 | i.O. | i.O. | i.O. |
| 6 | N | 1 | A | 50 | 1 : 6 | 1:0,2 | 7 | 7 | 10 | i.O. | i.O. | i.O. |
| 7 | N | 1 | C | 50 | 1 :15 | 1:0,5 | 12 | 12 | 10 | LM | LM | LM |
| 8 | L | 2 | B | 48 | 1 :12 | 1:0,5 | 7 | 5 | 5 | i.O. | i.O. | i.O. |
| 9 | L | 2 | C | 60 | 1 :15 | 1:0,5 | 8 | 8 | 10 | i.O. | i.O. | i.O. |
| 10 | M | 2 | C | 60 | 1 :15 | 1:0,5 | 6 | 6 | 6 | i.O. | i.O. | i.O. |
| 11 | L | 3 | A | 62 | 1 : 6 | 1:0,2 | 16 | 16 | 20 | LM | LM | M |
| 12 | N | 3 | B | 65 | 1 :12 | 1:0,5 | 10 | 10 | 12 | i.O. | i.O. | LM |
| 13 | L | 4 | B | 60 | 1 :12 | 1:0,5 | 3 | 3 | > 3 | i.O. | i.O. | i.O. |
| 14 | L | 4 | C | 64 | 1 :15 | 1:0,5 | 5 | 7 | 7 | i.O. | i.O. | i.O. |
| 15 | L | 5 | B | 56 | 1 :12 | 1:0,5 | 4 | 4 | 5 | i.O. | i.O. | i.O. |
| 16 | M | 5 | C | 62 | 1 :15 | 1:0,5 | 6 | 5 | 5 | i.O. | i.O. | i.O. |
| V 1 | L | X | A | 120 | 1 : 6 | 1:0,2 | 80 | XX | XX | n.i.O | — | — |
| V 2 | L | X | B | NM | 1 : 12 | 1:0,5 | 200 | XX | XX | n.i.O | — | — |
| V 3 | L | Y | A | 105 | 1 : 6 | 1:0,2 | 35 | 80 | XX | M,S | n.i.O | — |
| V 4 | L | Y | B | NM | 1 :12 | 1:0,5 | 100 | XX | XX | n.i.O | — | — |
| V 5 | L | X | D | 60 | 1 : 1 | 1:0,2 | 15 | 20 | 20 | LM | LM | LM |
| V 6 | L | Y | D | 62 | 1 : 1 | 1:0,5 | 5 | 7 | 7 | i.O | i.O | i.O |
| V 7 | L | Y | E | 100 | 1 : 2 | 1:0,5 | 7 | 7 | 7 | i.O | i.O | i.O |
| V 8 | L | X | E | T | 1 : 2 | 1:0,2 | 80 | XX | XX | n.i.O | — | — |
| V 9 | L | Y | F | 100 | 1 : 3 | 1:0,5 | 20 | 20 | 18 | M | M | M |

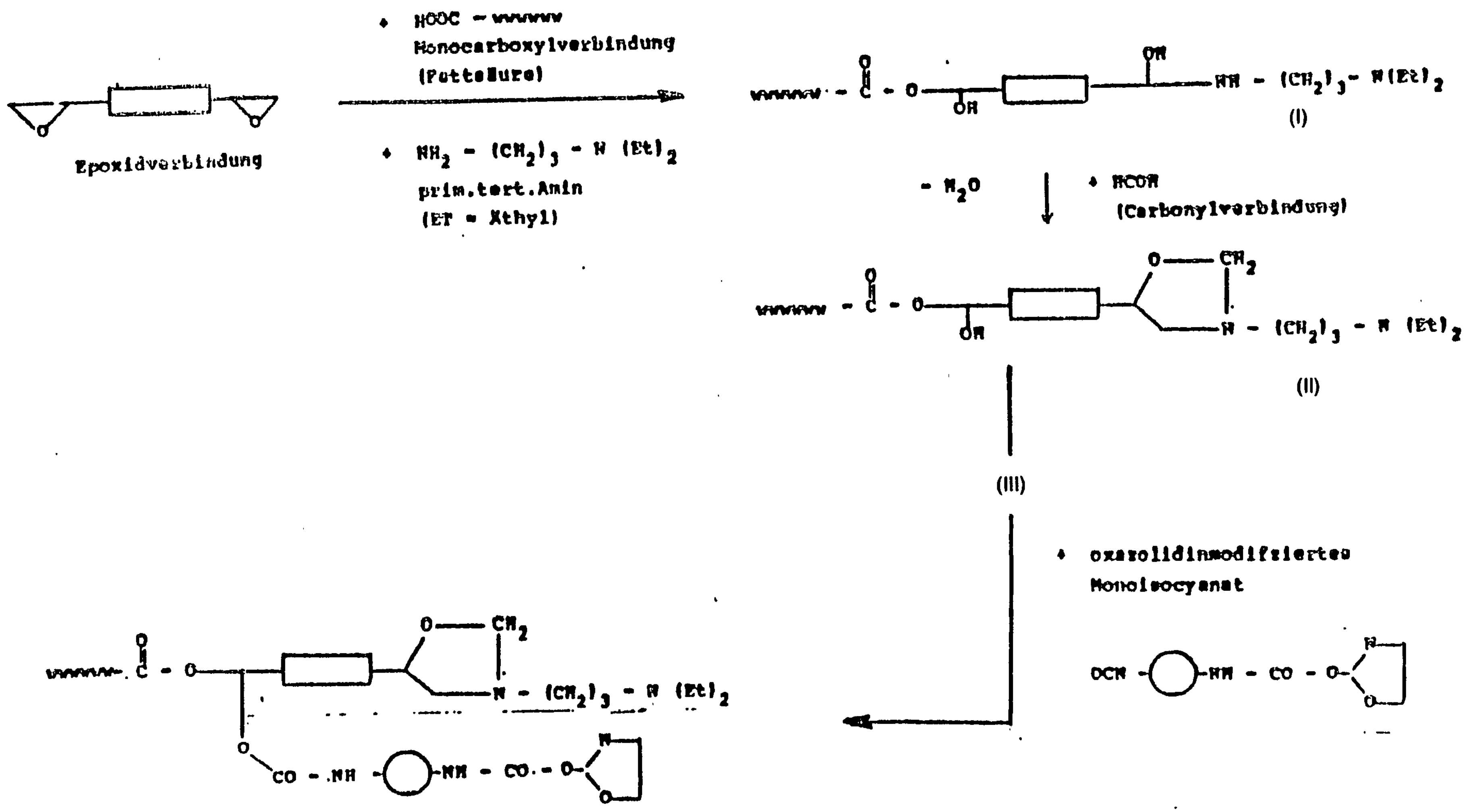


(I) (II) (III)

Formelschema für die erfindungsgemäße Herstellung eines Produktes auf Basis einer Diepoxidverbindung gemäß einer bevorzugten Arbeitsweise.

**Patentansprüche**

1. Verfahren zur Herstellung von kationischen, nach mindestens partieller Neutralisation der basischen Gruppen wasserverdünnbaren Bindemitteln auf der Basis von Oxazolidingruppen tragenden, modifizierten Epoxidverbindungen, dadurch gekennzeichnet, daß man eine Di- oder Polyepoxidverbindung mit einem Molekulargewicht von maximal 2000, vorzugsweise auf Basis von Diolen oder von Polyalkylenglykolen oder von Dienpolymeren oder von Bisphenol A oder von Phenolnovolaken oder ein Gemisch dieser Verbindungen mit, bezogen auf 1 Epoxidval dieser Verbindung, 0,4 bis 1,0 Mol primäre Aminogruppen von aliphatischen primären Mono- und/oder prim-.tertiären Diaminen und 0 bis 0,6 Mol einer Monocarboxylverbindung, wobei die Summe der primären Aminogruppen und der gegebenenfalls eingesetzten Carboxylgruppen mindestens 80 % der Anzahl der Epoxidgruppen in der Epoxidverbindung entspricht, bis zur vollständigen Umsetzung aller Epoxidgruppen reagiert, das Reaktionsprodukt mit einer, bezogen auf die vorhandenen NH-Gruppen, vorzugsweise äquimolaren Menge einer Carbonylverbindung, vorzugsweise Formaldehyd, unter Wasserabspaltung und Ausbildung einer Oxazolidingruppierung umsetzt und gegebenenfalls die vorhandenen isocyanatreaktiven H-Atome zur Gänze oder teilweise mit einer, gegebenenfalls Oxazolidingruppen tragenden Monoisocyanatverbindung oder gegebenenfalls mit einer Monoepoxidverbindung reagiert, wobei die Mengen der Ausgangsmaterialien so gewählt werden, daß die Endprodukte ein Molekulargewicht von 500 bis 4000, vorzugsweise von 600 bis 2000, ein Oxazolidinäquivalent von 250 bis 1200, eine Aminzahl von mindestens 80, vorzugsweise von 100 bis 200 mg KOH/g, und einen Anteil an aliphatischen Molekülteilen von mindestens 30, vorzugsweise 50 bis 90 % aufweisen.

2. Verfahren nach Anspruch 1, dadurch gekennzeichnet, daß man pro Epoxidval der eingesetzten Epoxidverbindung 0,3 bis 0,7 Mol eines prim.-tert. Diamins, 0 bis 0,7 Mol Fettsäuren mit mehr als 8, vorzugsweise mehr als 12 Kohlenstoffatomen und/oder 0 bis 0,7 Mol primäre Monoamine mit mehr als 3, vorzugsweise mehr als 8 Kohlenstoffatomen zur Umsetzung bringt und nach Bildung der Oxazolidinverbindung mindestens 50 % der freien Hydroxylgruppen mit einem Oxazolidingruppen tragenden Monoisocyanat umsetzt.

3. Verfahren nach den Ansprüchen 1 und 2, dadurch gekennzeichnet, daß man als aliphatische primäre Amine Fettamine einsetzt.

4. Verfahren nach Anspruch 1, dadurch gekennzeichnet, daß die Modifizierung durch die Oxazolidingruppen tragenden Monoisocyanate durch Umsetzung des Bindemittels mit Diisocyanaten und äquimolaren Mengen des Hydroxyalkyloxazolidins in situ erfolgt.

5. Verwendung der nach den Ansprüchen 1 bis 4 hergestellten Bindemittel zu Herstellung von Pigmentpasten.

6. Pigmentpasten auf Basis der gemäß den Ansprüchen 1 bis 4 hergestellten Bindemittel mit einem Bindemittel-Pigmentverhältnis von 1 : 5 bis 1 : 15.

7. Verwendung von Pigmentpasten auf Basis der gemäß den Ansprüchen 1 bis 4 hergestellten Bindemittel zur Pigmentierung von kathodisch abscheidbaren Elektrotauchlacken.

8. Verwendung von Pigmentpasten auf Basis der gemäß den Ansprüchen 1 bis 4 hergestellten Bindemittel als Pigmentkomponente beim 2-Komponenten-Nachsetzverfahren zur Nachgabe bei Elektrotauchlackieranlagen.

**Claims**

1. Process for preparing cationic binders which are water-dilutable after at least partial neutralisation of the basic groups, said binders being based on modified epoxide compounds carrying oxazolidine groups, characterised in that a di- or polyepoxide compound with a molecular weight of not more than 2000, preferably based on diols or polyalkylene glycols or diene polymers or bisphenol A or phenol novolaks or a mixture of these compounds is reacted with, based on 1 epoxide equivalent of this compound, 0.4 to 1.0 mol primary amino groups of aliphatic primary monoamines and/or primary tertiary diamines and 0 to 0.6 mol of a monocarboxyl compound, the sum of the primary amino groups and the carboxyl groups optionally used corresponding to at least 80 % of the number of epoxide groups in the epoxide compound, until there is total conversion of all the epoxide groups, said reaction product is further reacted with a preferably equimolar quantity based on the NH groups present, of a carbonyl compound, preferably formaldehyde, with the cleaving of water and the formation of an oxazolidine group and optionally the isocyanate-reactive H-atoms present are fully or partially reacted with a monoisocyanate compound optionally carrying oxazolidine groups, or possibly optionally with a monoepoxide compound, the quantities of the starting materials being such that the end products have a molecular weight of from 500 to 4000, preferably from 600 to 2000, an oxazolidine equivalent of 250 to 1200, an amine number of at least 80, preferably from 100 to 200 mg KOH/g, and a proportion of aliphatic molecular parts of at least 30, preferably 50 to 90 %.

2. Process according to claim 1, characterised in that, for each epoxide equivalent of the epoxide compound used, 0.3 to 0.7 mol of a primary tertiary diamine, 0 to 0.7 mol of fatty acids with more than 8, preferably more than 12 carbon atoms and/or 0 to 0.7 mol of primary monoamines with more than 3, preferably more than 8 carbon atoms are reacted and after the oxazolidine compound has been obtained

at least 50 % of the free hydroxyl groups are reacted with a monoisocyanate which carried oxazolidine groups.

3. Process according to claims 1 and 2, characterised in that fatty amines are used as aliphatic primary amines.

4. Process according to claim 1, characterised in that modification by the monoisocyanates containing oxazolidine groups is effected by reacting the binder with diisocyanates and equimolar quantities of the hydroxyalkyloxazolidine in situ.

5. Use of the binders prepared according to claims 1 to 4 for the production of pigment pastes.

6. Pigment pastes based on the binders prepared according to claims 1 to 4 with a ratio of binder to pigment of from 1 : 5 to 1 : 15.

7. Use of pigment pastes based on the binders prepared according to claims 1 to 4 for pigmenting cathodically depositable electrodeposition paints.

8. Use of pigment pastes based on the binders prepared according to claims 1 to 4, as the pigment component in the 2-component addition method for adding in electrodeposition painting installation.

## Revendications

1. Procédé de préparation de liants cationiques diluables à l'eau après neutralisation au moins partielle des groupes basiques à base de composés époxydiques modifiés portant des groupes oxazolidine, caractérisé en ce que l'on fait réagir jusqu'à réaction totale de tous les groupes époxyde un composé di- ou polyépoxydique ayant un poids moléculaire d'au plus 2000, de préférence à base de diols ou de polyalkylèneglycols ou de polymères de diènes ou de bisphénol A ou de novolaques de phénol ou d'un mélange de ces composés avec, par rapport à 1 val. d'époxyde de ce composé, 0,4 à 1,0 mole de groupes amine primaires de monoamines primaires et/ou de diamines primaires-tertiaires aliphatiques et 0 à 0,6 mole d'un composé monocarboxylique, la somme des groupes amine primaires et des groupes carboxyle éventuellement mis en jeu correspondant à au moins 80 % du nombre des groupes époxyde dans le composé époxydique, on fait réagir le produit de la réaction avec une quantité de préférence équimolaire, par rapport aux groupes NH présents, d'un composé carbonylé, de préférence le formaldéhyde, avec séparation de l'eau et formation d'un groupement oxazolidine et on fait réagir éventuellement les atomes de H présents réactifs vis-à-vis des isocyanates totalement ou partiellement avec un composé de monoisocyanate portant éventuellement des groupes oxazolidine ou éventuellement avec un composé monoépoxydique, les quantités des produits de départ étant choisies de telle façon que les produits finals présentent un poids moléculaire de 500 à 4000, de préférence de 600 à 2000, un équivalent d'oxazolidine de 250 à 1200, un indice d'amine d'au moins 80, de préférence de 100 à 200 mg de KOH/g, et une proportion de fractions moléculaires aliphatiques d'au moins 30, de préférence de 50 à 90 %.

2. Procédé selon la revendication 1, caractérisé en ce que l'on fait réagir par val. d'époxyde du composé époxydique mis en jeu 0,3 à 0,7 mole d'une diamine primaire-tertiaire, 0 à 0,7 mole d'acides gras avec plus de 8, de préférence plus de 12 atomes de carbone et/ou 0 à 0,7 mole de monoamine primaire avec plus de 3, de préférence plus de 8 atomes de carbone et après formation du composé d'oxazolidine on fait réagir au moins 50 % des groupes hydroxyle libres avec un monoisocyanate portant des groupes oxazolidine.

3. Procédé selon les revendications 1 et 2, caractérisé en ce que l'on utilise des amines grasses en tant qu'amines primaires aliphatiques.

4. Procédé selon la revendication 1, caractérisé en ce que la modification par les monoisocyanates portant des groupes oxazolidine a lieu in situ par réaction du liant avec des diisocyanates et des quantités équimolaires de l'hydroxyalkyloxazolidine.

5. Utilisation du liant préparé selon les revendications 1 à 4 pour la préparation de pâtes de pigments.

6. Pâtes de pigments à base des liants préparés selon les revendications 1 à 4 avec un rapport liant-pigment de 1 : 5 à 1 : 15.

7. Utilisation de pâtes de pigments à base des liants préparés selon les revendications 1 à 4 pour la pigmentation de peintures pour trempage électrophorétique précipitables à la cathode.

8. Utilisation de pâtes de pigments à base des liants préparés selon les revendications 1 à 4 comme constituants de pigments dans le procédé de regarnissage à deux constituants pour une utilisation dans les installations de trempage électrophorétique.